# EUROPEAN PATENT APPLICATION

(11) **EP 4 794 220 A1**
(43) Date of publication of application: **19.08.2026**
(21) Application number: 26157338.0
(22) Date of filing: 09.02.2026
(51) Int. Cl.: H04B 7/06, H04B 7/185, H04B 7/204, H04W 74/00, H04W 84/00

(54) **USER EQUIPMENT AND SATELLITE IN COMMUNICATION WITH EACH OTHER OVER NON-TERRESTRIAL NETWORK, AND OPERATION METHOD THEREOF**

(30) Priority: 17.02.2025 KR 20250020356
(71) Applicant: Samsung Electronics Co., Ltd., Suwon-si, Gyeonggi-do 16677 (KR); UIF (University Industry Foundation), Yonsei University, Seoul 03722 (KR)
(72) Inventor: HONG, Daesik, Seoul (KR); KIM, Hanwoong, Seoul (KR)
(74) Representative: Marks & Clerk LLP

(57) **Abstract**

Provided is an operation method of user equipment in communication with a satellite in a non-terrestrial network, the operation method including receiving a synchronization signal block (SSB) burst through wide beams from the satellite, performing, based on the SSB burst, an indexing operation on narrow beams corresponding to the wide beams, estimating an optimal narrow beam, based on the indexed narrow beams, and performing random access to the satellite, based on the estimated narrow beam.

## Description

### BACKGROUND

As wireless communication systems develop, non-terrestrial network (NTN) communication technology is being studied to expand communication coverage to the entire globe by combining satellite communication with mobile communication. The purpose of an NTN is to provide wide service coverage by establishing communication services in areas where it is physically or economically impossible to install base stations for mobile communication.

NTN communication technology may provide communication between a satellite and user equipment by applying terrestrial network communication technology. In particular, the method for the user equipment to initially connect to the satellite may be operated identically or similarly to the method for the user equipment to initially connect to the base station on the ground. However, since the channel between a satellite and the user equipment in the NTN has a line of sight (LoS) dominant feature due to dominance in line of sight as compared to the channel between the user equipment and the base station in the terrestrial network, research on the initial connection method that takes this feature into account is necessary.

### SUMMARY

The inventive concepts provide an effective method for initial connection between user equipment and a satellite, considering a feature of a channel of a non-terrestrial network.

According to aspects of the inventive concepts, there is provided an operation method of user equipment in communication with a satellite in a non-terrestrial network, the operation method including receiving a synchronization signal block (SSB) burst through wide beams from the satellite, performing, based on the SSB burst, an indexing operation on narrow beams corresponding to the wide beams, estimating an optimal narrow beam based on the indexed narrow beams, and performing random access to the satellite based on the estimated narrow beam.

According to aspects of the inventive concepts, there is provided an operation method of user equipment in communication with a satellite in a non-terrestrial network, the operation method including receiving a SSB burst through wide beams from the satellite, obtaining indexing assistance information included in the SSB burst, performing, based on the indexing assistance information, an indexing operation on narrow beams corresponding to the wide beams, selecting one of the indexed narrow beams, and performing random access to the satellite based on the selected narrow beam.

According to aspects of the inventive concepts, there is provided user equipment including a radio frequency (RF) circuit configured to receive a SSB burst through wide beams from a satellite in a non-terrestrial network, and a processor configured to perform, based on the SSB burst, an indexing operation on narrow beams corresponding to the wide beams, estimate an optimal narrow beam based on the indexed narrow beams, and perform random access to the satellite based on the estimated narrow beam.

According to aspects of the inventive concepts, there is provided an operation method of a satellite in communication with user equipment in a non-terrestrial network, the operation method including, in a first time period corresponding to a duration of a SSB burst, sweeping a plurality of wide beams in units of mutually-orthogonal wide beams and transmitting a plurality of SSBs to the user equipment, and, in a second time period subsequent to the first time period, receiving a random access preamble from the user equipment through a physical random access channel (PRACH) resource corresponding to an index of a narrow beam selected by the user equipment.

In addition, the plurality of SSBs include indexing assistance information that functions as a basis for an indexing operation for a plurality of narrow beams corresponding to the plurality of wide beams.

In addition, the operation method further includes identifying an index of the selected narrow beam based on the PRACH resource.

In addition, the operation method further includes transmitting, in the second time period, a random access response (RAR) to the user equipment based on the index of the identified narrow beam.

In addition, the operation method further includes transmitting, to the user equipment, a physical downlink shared channel (PDSCH) including ephemeris information that functions as a basis for selection of the narrow beam by the user equipment.

In addition, the non-terrestrial network corresponds to a low-orbit satellite communication network.

In addition, the non-terrestrial network is based on a sub-6 GHz frequency range in a 5G communication standard.

In addition, the plurality of wide beams are all swept in the first time period.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram of a wireless communication system according to embodiments;
FIG. 2 is a schematic block diagram of user equipment according to embodiments;
FIG. 3 is a diagram of a sequence between user equipment and a satellite in a non-terrestrial network, according to embodiments;
FIGS. 4A and 4B are diagrams illustrating wide beams and narrow beams, according to embodiments;
FIGS. 5A and 5B are flowcharts of specific embodiments of operation S100 in FIG. 3;
FIG. 6A is a diagram of an SSB burst received by a wide beam sweep of the satellite in FIG. 5A, and FIG. 6B is a diagram of an SSB burst received by a wide beam sweep of the satellite in FIG. 5B;
FIG. 7 is a flowchart of a specific embodiment of operation S120 in FIG. 3;
FIGS. 8A and 8B are flowcharts of specific embodiments of operation S122 in FIG. 7;
FIG. 9 is a block diagram of user equipment according to embodiments;
FIG. 10A is a table diagram specifically illustrating indexing target beam information of FIG. 9, and FIG. 10B is a table diagram specifically illustrating indexing pattern information of FIG. 9;
FIG. 11 is a flowchart of a specific embodiment of operation S130 in FIG. 3;
FIG. 12 is a flowchart of a specific embodiment of operation S131 in FIG. 11;
FIG. 13 is a flowchart of a specific embodiment of operation S132 in FIG. 11;
FIG. 14 is a block diagram of user equipment according to embodiments;
FIG. 15 is a flowchart of a specific embodiment of operation S130 in FIG. 3;
FIG. 16 is a flowchart of a specific embodiment of operation S135 in FIG. 15;
FIG. 17 is a diagram of a sequence between user equipment and a satellite in a non-terrestrial network, according to embodiments;
FIG. 18 is a flowchart of a specific embodiment of operation S 150 in FIG. 17;
FIG. 19 is a block diagram of an electronic device according to embodiments; and
FIG. 20 is a diagram of communication devices that perform a beam estimation operation, according to embodiments.

### DETAILED DESCRIPTION

Hereinafter, embodiments are described in detail with reference to the accompanying drawings.

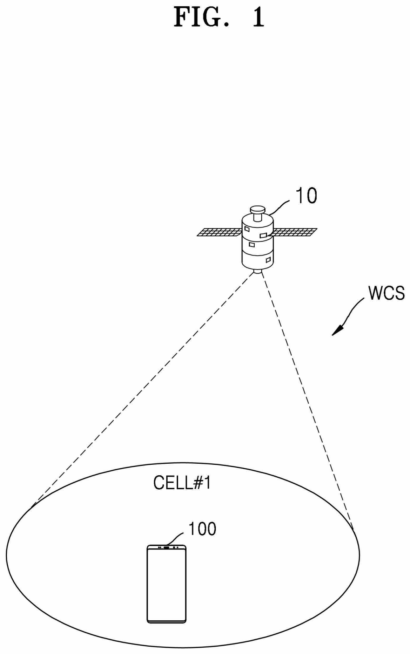

FIG. 1 is a block diagram of a wireless communication system WCS according to embodiments. The wireless communication system WCS may support a communication service based on at least one of a plurality of wireless networks using a non-terrestrial network. For example, the plurality of wireless networks may include a third generation (3G) network, a fourth generation (4G) network, a fifth generation (5G) network, a sixth generation (6G) network, and a wireless local area network (WLAN).

In addition, various functions described below may be implemented or supported by artificial intelligence technology or one or more computer programs. Each of the computer programs is configured with computer-readable program code and embodied in a computer-readable medium. The terms "application" and "program" refer to one or more computer programs, software components, sets of instructions, procedures, functions, objects, classes, instances, related data, or portions thereof suitable for implementing suitable computer-readable program code. The term "computer-readable program code" includes all types of computer code, including source code, object code, and executable code. The term "computer-readable medium" includes any type of medium that can be accessed by a computer, such as read-only memory (ROM), random-access memory (RAM), a hard disk drive, a compact disc (CD), a digital video disc (DVD), or any other type of memory. A "non-transitory" computer-readable medium excludes wired, wireless, optical, or other communication links that transmit transitory electrical or other signals. The non-transitory computer-readable medium includes a medium where data can be permanently stored, and a medium where data can be stored and later overwritten, such as a rewritable optical disc or an erasable memory device.

Hereinafter, embodiments are described using a hardware approach. However, the embodiments do not exclude a software-based approach because they include technology that uses both hardware and software.

The inventive concepts relate to user equipment and a satellite in communication with each other over a non-terrestrial network, and an operation method thereof.

Referring to FIG. 1, the wireless communication system WCS may include a satellite 10 and user equipment 100. The wireless communication system WCS may also be referred to as a non-terrestrial network wireless communication system WCS. In FIG. 1, only the satellite 10 for providing the communication service to the user equipment 100 is shown. However, at least one of a gateway, a data network, a network entity, and a network node may be added to FIG. 1 to control or assist the operation of the satellite 10. In this specification, the inventive concept focuses on signaling between the satellite 10 and the user equipment 100, but this is only for facilitating understanding. The inventive concepts are not limited thereto.

According to embodiments, the satellite 10 may distinguish a plurality of cells based on beamforming technology and may provide a first cell CELL#1 among the plurality of cells to the user equipment 100, depending on the position of the user equipment 100.

On the other hand, the user equipment 100 may follow a certain procedure for initial connection to the satellite 10 before being provided with the first cell CELL#1. The satellite 10 may sweep a plurality of transmission beams and transmit a plurality of synchronization signal blocks (SSBs) to the user equipment 100. The user equipment 100 may select an optimal transmission beam from among the plurality of transmission beams based on the received plurality of SSBs to perform random access to the satellite 10 for the initial connection through the selected optimal transmission beam. In this specification, the operation of selecting, by the user equipment 100, the optimal transmission beam from among the plurality of transmission beams of the satellite 10 may be referred to as a cell search operation.

A narrow beam search algorithm or a wide beam search algorithm may be used for cell search by the user equipment 100.

The narrow beam search algorithm may be the basis for the satellite 10 to sweep a plurality of narrow beams and transmit the plurality of SSBs to the user equipment 100 and for the user equipment 100 to select an optimal narrow beam from among the plurality of narrow beams. However, in the narrow beam search algorithm, the number of narrow beams swept by the satellite 10 is very large. Thus, the user equipment 100 needs to receive a plurality of SSB bursts to perform the cell search, which delays the initial connection. The wide beam search algorithm has been proposed to improve the problem described above.

The wide beam search algorithm may be the basis for the satellite 10 to sweep a plurality of wide beams corresponding to the plurality of narrow beams and transmit the plurality of SSBs to the user equipment 100 and for the user equipment 100 to select an optimal wide beam from among the plurality of wide beams. However, in the wide beam search algorithm, the number of pieces of user equipment attempting the initial connection to the satellite 10 through the wide beam may increase, thereby increasing the probability of collision between preambles of the user equipment in the random access process. In this case, an additional signaling procedure may be required to select the narrow beam used in communication between the satellite 10 and the user equipment 100, which causes inefficient use of radio resources.

In the inventive concept, considering a line of sight (LoS) dominant feature of a channel between the satellite 10 and the user equipment 100, embodiments related to the initial connection may be presented to minimize the time required for the user equipment 100 to search for the satellite 10 and to improve the use efficiency of radio resources by increasing the probability of successful random access.

According to embodiments, the satellite 10 may transmit the plurality of SSBs to the user equipment 100 through the plurality of wide beams. One wide beam may correspond to at least two narrow beams (e.g., a plurality of narrow beams). This may be understood that at least two narrow beams belong to one wide beam. Accordingly, the terms 'wide' and 'narrow' may be considered relative terms, defining different beam types, such that the spatial coverage area of a wide beam is larger than the spatial coverage area of a narrow beam. In one specific example, the satellite 10 may sweep the plurality of wide beams in units of a certain number of mutually-orthogonal wide beams and transmit the plurality of SSBs to the user equipment 100. This allows the user equipment 100 to receive a minimum number of SSB bursts from the satellite 10. Hereinafter, embodiments in which the user equipment 100 receives one SSB burst is mainly described, but this is only an example and is not limited thereto.

According to embodiments, the user equipment 100 may perform an indexing operation on narrow beams corresponding to the plurality of wide beams, based on the SSB burst received from the satellite 10. In this specification, the indexing operation on the narrow beams performed in the user equipment 100 may be defined as an operation of indexing narrow beams by the user equipment 100 to identify the same narrow beams indexed by the satellite 10 even in the user equipment 100. For a specific example, the user equipment 100 may obtain indexing assistance information required for the indexing operation from the SSBs included in the SSB burst and may perform the indexing operation on narrow beams formed in the satellite 10 based on the obtained indexing assistance information. On the other hand, the narrow beams indexed by the user equipment 100 may be same as the narrow beams indexed by the satellite 10. As an example, the indexing assistance information may include first information for determining indexing target beams and second information for determining an indexing pattern.

According to embodiments, the user equipment 100 may estimate an optimal narrow beam based on the indexed narrow beams. As a specific example, the user equipment 100 may select a narrow beam estimated as the optimal narrow beam from among the indexed narrow beams based on a relative position between the user equipment 100 and the satellite 10. As an example, the user equipment 100 may obtain the position information of the satellite 10 from a physical downlink channel (PDSCH) transmitted from the satellite 10 and may obtain the position information of the user equipment 100 by measuring the position of the user equipment 100 in a certain way. The user equipment 100 may calculate the relative position between the user equipment 100 and the satellite 10, based on the position information of the satellite 10 and the position information of the user equipment 100. A method of estimating the optimal narrow beam by the user equipment 100 based on the relative position may be based on the LoS dominant feature of the channel between the satellite 10 and the user equipment 100.

According to embodiments, the user equipment 100 may perform random access to the satellite 10 based on the estimated narrow beam. In a specific example, the user equipment 100 may identify the satellite 10 for the initial connection, based on the estimated narrow beam and identification information of the satellite 10 obtained from SSBs included in the SSS burst, for example, physical cell ID (PCI) information. As an example, the user equipment 100 may select a physical random access channel (PRACH) resource based on the PCI information and the estimated narrow beam and may initiate the random access by transmitting a random access preamble to the satellite 10 using the selected PRACH resource.

According to the initial connection method in the non-terrestrial network according to embodiments, the time required for the cell search by the user equipment 100 may be reduced by minimizing the number of SSB bursts that the user equipment 100 needs to receive through a wide beam sweep of the satellite 10. The probability of successful random access may be increased by performing the random access using the optimal narrow beam estimated based on the SSB burst received by the user equipment 100.

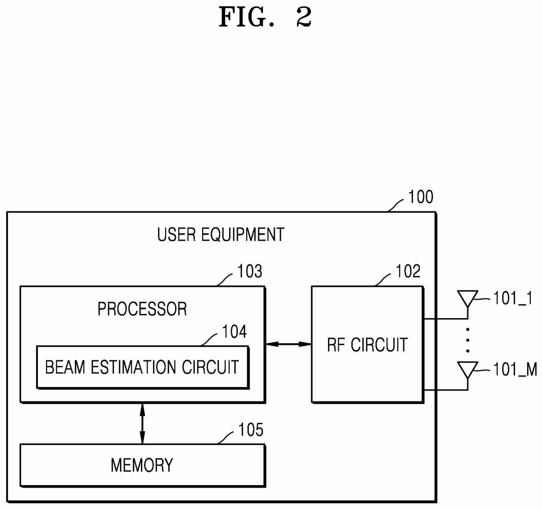

FIG. 2 is a schematic block diagram of the user equipment 100 according to embodiments.

Referring to FIG. 2, the user equipment 100 may include a plurality of antennas 101_1 to 101_M, a radio frequency (RF) circuit 102, a processor 103, and a memory 105. The implementation of the user equipment 100 shown in FIG. 2 is merely an example and is not limited thereto. The user equipment 100 may include more components. In addition, the RF circuit 102 may be referred to as an RF integrated circuit.

The RF circuit 102 may perform a function of transmitting and receiving a signal by using the plurality of antennas 101_1 to 101_M through a wireless channel. Specifically, the RF circuit 102 may generate an RF signal by performing a digital-to-analog conversion operation and a frequency up-conversion operation on a baseband signal provided from the processor 103 and may transmit the RF signal through the plurality of antennas 101_1 to 101_M. In addition, the RF circuit 102 may generate the baseband signal by performing a frequency down-conversion operation and an analog-to-digital conversion operation on the RF signal received through the plurality of antennas 101_1 to 101_M and may provide the baseband signal to the processor 103.

As an example, the RF circuit 102 may include a transmit filter, a receive filter, a power amplifier, a low noise amplifier, a mixer, an oscillator, a digital-to-analog converter (DAC), an analog-to-digital converter (ADC), and the like. In addition, the RF circuit 102 may further include a plurality of RF chains and perform beamforming by using the plurality of antennas 101_1 to 101_M. The RF circuit 102 may adjust a phase and a magnitude of each of signals transmitted and received through the plurality of antennas 101_1 to 101_M for beamforming. In addition, the RF circuit 102 may perform multi-input multi-output (MIMO) and receive a plurality of layers when performing the MIMO operation.

The processor 103 may control the overall operations of the user equipment 100. According to embodiments, the processor 103 may include a beam estimation circuit 104 configured to perform the indexing operation on narrow beams based on the SSB burst received from the satellite (10 in FIG. 1) through the RF circuit 102 and estimate the optimal narrow beam among the indexed narrow beams. In FIG. 2, the beam estimation circuit 104 is illustrated as being included in the processor 103 as a hardware component but is not limited thereto. The beam estimation circuit 104 may be implemented in software and stored in the memory 105 in the form of code executed by the processor 103.

The memory 105 may provide memory space necessary for the operation of the processor 103. According to embodiments, the memory 105 may provide the memory space necessary for the indexing operation on narrow beams or the estimation operation on the optimal narrow beam, performed by the beam estimation circuit 104. In some embodiments, the memory 105 may store information referred to for the beam estimation circuit 104 to effectively perform the indexing operation or the estimation operation with a small amount of computation.

The operation of the beam estimation circuit 104 described with reference to FIG. 2 may be understood as the operation of the processor 103 or the operation of the user equipment 100.

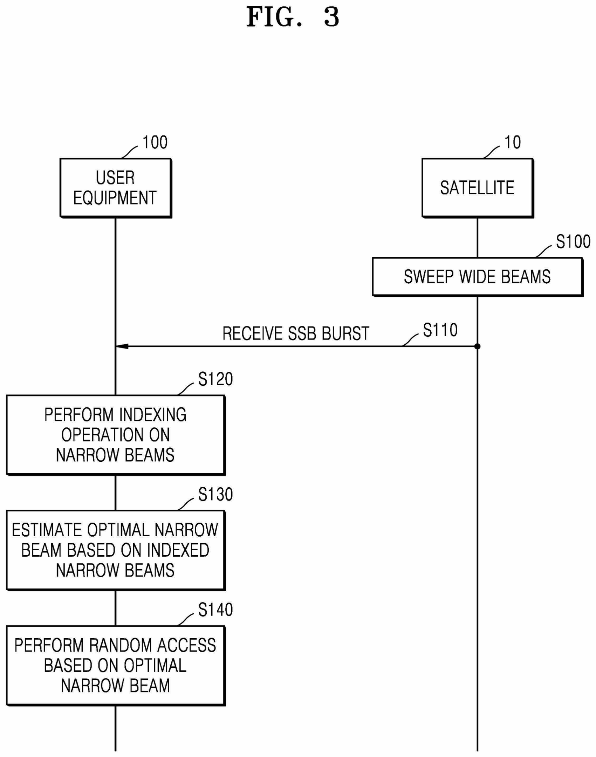

FIG. 3 is a sequence diagram between user equipment 100 and satellite 10 in the non-terrestrial network, according to embodiments.

Referring to FIG. 3, in operation S100, the satellite 10 may sweep wide beams. According to embodiments, the satellite 10 may sweep the wide beams in units of a certain number of mutually-orthogonal wide beams. The satellite 10 may transmit SSBs corresponding to the swept wide beams to the user equipment 100.

In operation S110, the user equipment 100 may receive the SSB burst through some of the wide beams swept by the satellite 10. For ease of understanding of the inventive concept, it may be illustrated herein that the SSB burst received by the user equipment 100 includes SSBs corresponding to wide beams directed toward the user equipment 100 among the wide beams of the satellite 10. However, this is for ease of understanding. The inventive concept is not limited thereto.

In operation S120, the user equipment 100 may perform the indexing operation on narrow beams corresponding to the wide beams swept by the satellite 10. According to embodiments, the user equipment 100 may perform the indexing operation on narrow beams based on the received SSB burst.

In operation S130, the user equipment 100 may estimate the optimal narrow beam based on the indexed narrow beams. According to embodiments, the user equipment 100 may select one of the indexed narrow beams as the optimal narrow beam based on the relative position between the satellite 10 and the user equipment 100.

In operation S 140, the user equipment 100 may perform random access to the satellite 10 based on the estimated narrow beam. According to embodiments, the user equipment 100 may select the PRACH resource based on the index of the estimated narrow beam and the PCI information corresponding to the satellite 10 and may initiate the random access by transmitting the preamble to the satellite 10 by using the selected PRACH resource.

Hereinafter, the non-terrestrial network corresponds to a low-orbit satellite communication network and is mainly described based on a sub-6 GHz frequency range in a 5G network standard. However, this is only an example. The inventive concept is not limited thereto.

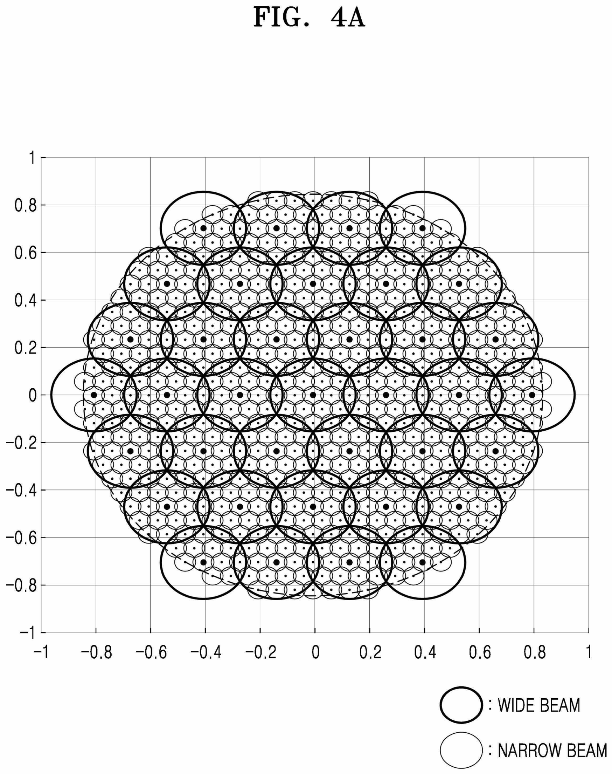

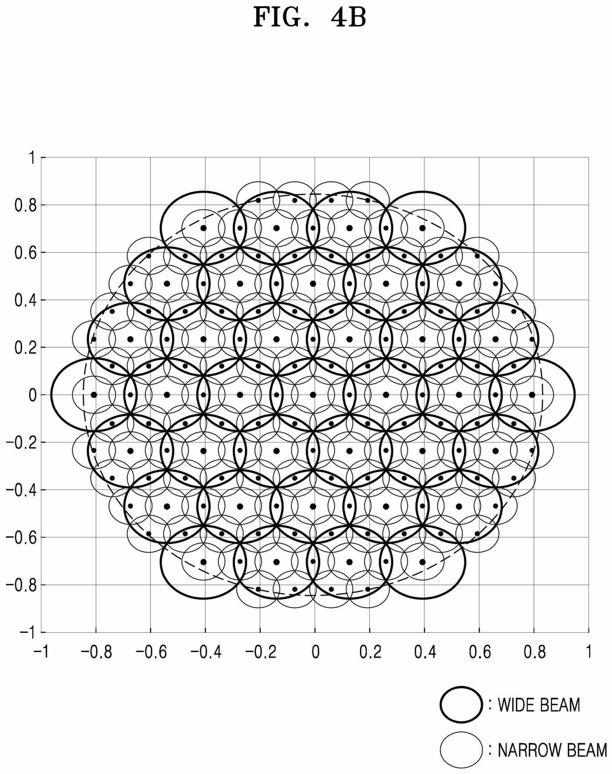

FIGS. 4A and 4B are diagrams illustrating wide beams and narrow beams, according to embodiments. In FIGS. 4A and 4B, the wide beams and the narrow beams managed by the satellite (10 in FIG. 3) on the U-V plane are illustrated. The U-V plane is an orthogonal coordinate system used in satellite communication and beamforming. The U-V plane is a two-dimensional coordinate representation of the antenna's far-field radiation pattern. For instance, the three-dimensional angular space may be projected onto a flat plane defined by direction cosines relative to the antenna aperture. The wide beams and the narrow beams may be visualized on the U-V plane and used for the future indexing operation and the optimal beam estimation operation. However, this is only an example and is not limited thereto. Various planes may be used for visualization of the wide beams and the narrow beams.

Referring to FIG. 4A, when a minimum elevation angle of the satellite (10 in FIG. 3) has a first value (e.g., 25 degrees) and a half power beam width (HPBW) of the narrow beam has a second value (e.g., 4.4127 degrees), the satellite (10 in FIG. 3) may manage 583 narrow beams and may manage 37 wide beams corresponding to the narrow beams. One wide beam may correspond to a plurality of narrow beams.

According to embodiments, in a first time period corresponding to the duration of one SSB burst, the satellite (10 in FIG. 3) may sweep 37 wide beams in units of mutually-orthogonal wide beams and transmit SSBs to the user equipment (100 in FIG. 3). The number of narrow beams per wide beam may vary, depending on the location of the wide beam on the antenna's service area. Wide beams located at the edge of the service area may include fewer narrow beams than wide beams located at the center. The number of narrow beams within each wide beam may vary depending on the beam location to ensure that the aggregate coverage area conforms to a predefined boundary, such as a scan limit or a geographic horizon.

According to embodiments, the user equipment (100 in FIG. 3) may perform the indexing operation on 583 narrow beams based on the received SSB burst from the satellite (10 in FIG. 3). The user equipment (100 in FIG. 3) may estimate the optimal narrow beam based on the indexed narrow beams. As a specific example, the user equipment (100 in FIG. 3) may select one optimal narrow beam from among 583 indexed narrow beams based on the relative position between the satellite (10 in FIG. 3) and the user equipment (100 in FIG. 3). The user equipment (100 in FIG. 3) may select the PRACH resource based on the estimated narrow beam (or selected narrow beam) as the optimal narrow beam and transmit the preamble to the satellite (10 in FIG. 3) using the selected PRACH resource to initiate the random access.

With further reference to FIG. 4B, when the minimum elevation angle of the satellite (10 in FIG. 3) has a first value (e.g., 25 degrees) and the HPBW of the narrow beam has a third value (e.g., 8.8320 degrees), the satellite (10 in FIG. 3) may manage 151 narrow beams and may manage 37 wide beams corresponding to the narrow beams. One wide beam may correspond to a plurality of narrow beams. Since the operations of the satellite (10 in FIG. 3) and the user equipment (100 in FIG. 3) have been described above with reference to FIG. 4A, they are omitted below.

However, FIG. 4A and FIG. 4B are only embodiments and are not limited thereto. It is understood that the inventive concept can be applied to narrow beams and wide beams which are variously determined based on at least one of the minimum elevation angle of the satellite (10 in FIG. 3), the HPBW of the narrow beam, and the number of narrow beams corresponding to one wide beam.

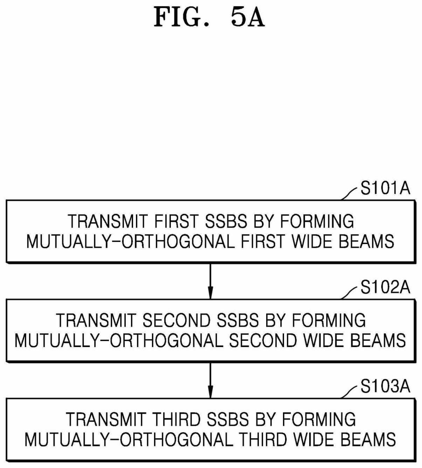

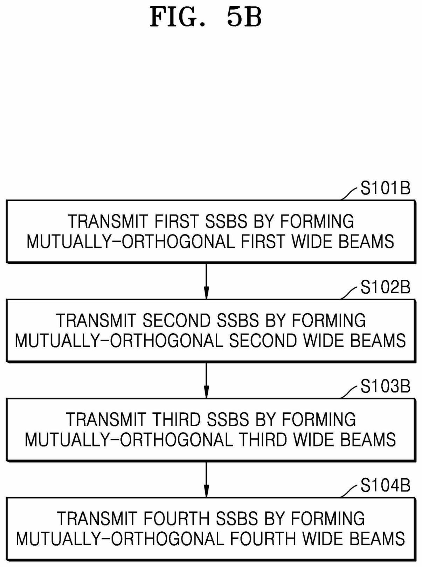

FIGS. 5A and 5B are flowcharts of specific embodiments of operation S100 in FIG. 3. In FIGS. 5A and 5B, based on the embodiment of FIG. 4A, it is assumed that the number of narrow beams is 583 and the number of wide beams is 37, managed by the satellite (10 in FIG. 3). In addition, it is assumed that the satellite (10 in FIG. 3) can form 16 mutually-orthogonal wide beams at a time in FIG. 5A, and the satellite (10 in FIG. 3) can form 10 mutually-orthogonal wide beams at a time in FIG. 5B. However, this is merely an example for facilitating understanding. The inventive concept is not limited thereto. That is, the satellite (10 in FIG. 3) may set a variety of numbers of mutually-orthogonal wide beams formed at a time to sweep all wide beams in operation S100, according to the number of wide beams.

Referring to FIG. 5A, operation S100 (FIG. 3) may include operation S101A to operation S103A. Operation S101A to operation S103A may be performed in the first time period corresponding to the duration of one SSB burst. That is, all wide beams managed by the satellite (10 in FIG. 3) may be swept in the first time period.

In operation S101A, the satellite (10 in FIG. 3) may form 16 mutually-orthogonal first wide beams among 37 wide beams to transmit first SSBs.

In operation S102A, the satellite (10 in FIG. 3) may form 16 mutually-orthogonal second wide beams from the remaining 21 wide beams to transmit second SSBs. That is, the satellite (10 in FIG. 3) may sweep from the first wide beams to the second wide beams.

In addition, in operation S103A, the satellite (10 in FIG. 3) may form the remaining 5 mutually-orthogonal third wide beams to transmit third SSBs. That is, the satellite (10 in FIG. 3) may sweep from the second wide beams to the third wide beams.

On the other hand, in a second time period subsequent to the first time period, the satellite (10 in FIG. 3) may receive a random access preamble from the user equipment (100 in FIG. 3) through the PRACH resource corresponding to the index of the narrow beam selected by the user equipment (100 in FIG. 3).

Referring to FIG. 5B, operation S100 (FIG. 3) may include operation S101B to operation S104B. Operation S101B to operation S104B may be performed in the first time period corresponding to the duration of one SSB burst.

In operation S101B, the satellite (10 in FIG. 3) may form 10 mutually-orthogonal first wide beams among 37 wide beams to transmit the first SSBs.

In operation S102B, the satellite (10 in FIG. 3) may form 10 mutually-orthogonal second wide beams among the remaining 27 wide beams to transmit the second SSBs. That is, the satellite (10 in FIG. 3) may sweep from the first wide beams to the second wide beams.

In operation S103B, the satellite (10 in FIG. 3) may form 10 mutually-orthogonal third wide beams among the remaining 17 wide beams to transmit the third SSBs. That is, the satellite (10 in FIG. 3) may sweep from the second wide beams to the third wide beams.

In addition, in operation S104B, the satellite (10 in FIG. 3) may form the remaining 7 mutually-orthogonal fourth wide beams to transmit fourth SSBs. That is, the satellite (10 in FIG. 3) may sweep from the third wide beams to the fourth wide beams.

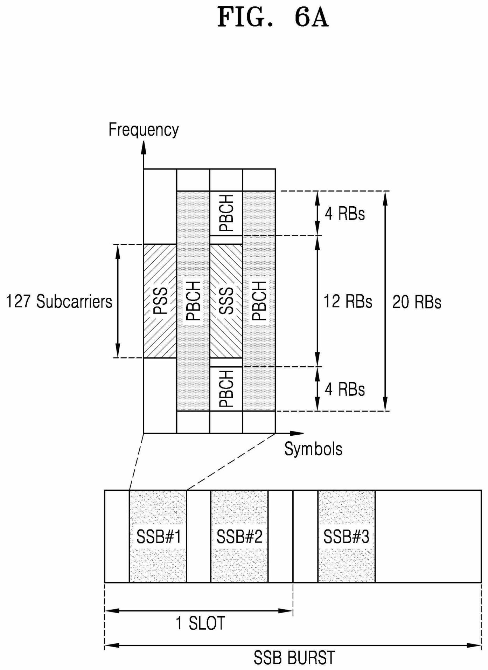

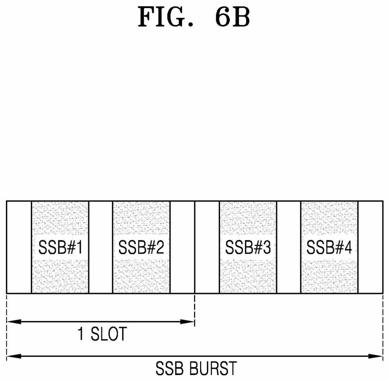

FIG. 6A is a diagram of an SSB burst received by a wide beam sweep of the satellite in FIG. 5A, and FIG. 6B is a diagram of an SSB burst received by a wide beam sweep of the satellite in FIG. 5B.

Referring to FIG. 6A, the user equipment (100 in FIG. 3) may receive the SSB burst including first to third SSBs SSB#1, SSB#2, and SSB#3. The first SSB SSB#1 may include a primary synchronization signal (PSS), a secondary synchronization signal (SSS), and a physical broadcast channel (PBCH). As an example, the first SSB SSB#1 may include four symbols. The PSS, the SSS, and the PBCH may be located in places corresponding to certain resource blocks RBs in a frequency axis direction. In addition, one resource block RB may consist of 12 consecutive subcarriers. As an example, the PSS corresponding to a first symbol may be transmitted to the user equipment (100 in FIG. 3) through 127 subcarriers.

As an example, when the sub-carrier spacing (SCS) is 15 kHz, one slot length is 1 ms, and the duration of the SSB burst is 2 ms, the SSB burst may include two slots. In one slot, up to two SSBs may be placed.

According to embodiments, the first SSB SSB#1 and the second SSB SSB#2 may be sequentially arranged in a first slot, and the third SSB SSB#3 may be arranged in a second slot.

As an example, the first SSB SSB#1 may correspond to one of the first SSBs in operation S101A in FIG. 5A. That is, the first SSB #0 may correspond to an SSB transmitted through the wide beam directed toward the user equipment (100 in FIG. 3) among the first wide beams. The second SSB SSB#2 may correspond to one of the second SSBs in operation S102A in FIG. 5A. That is, the second SSB SSB#2 may correspond to an SSB transmitted through the wide beam directed toward the user equipment (100 in FIG. 3) among the second wide beams. The third SSB SSB#3 may correspond to one of the third SSBs in operation S103A in FIG. 5A. That is, the third SSB SSB#3 may correspond to an SSB transmitted through the wide beam directed toward the user equipment (100 in FIG. 3) among the third wide beams.

According to embodiments, the user equipment (100 in FIG. 3) may perform the indexing operation on the narrow beams based on the first to third SSBs SSB#1, SSB#2, and SSB#3 included in one SSB burst and may estimate the optimal narrow beam based on the indexed narrow beams.

Referring to FIG. 6B, according to embodiments, the first SSB SSB#1 and the second SSB SSB#2 may be sequentially arranged in the first slot, and the third SSB SSB#3 and a fourth SSB SSB#4 may be sequentially arranged in the second slot.

As an example, the first SSB SSB#1 may correspond to one of the first SSBs in operation S101B in FIG. 5B. That is, the first SSB #0 may correspond to an SSB transmitted through the wide beam directed toward the user equipment (100 in FIG. 3) among the first wide beams. The second SSB SSB#2 may correspond to one of the second SSBs in operation S102B in FIG. 5B. That is, the second SSB #1 may correspond to an SSB transmitted through the wide beam directed toward the user equipment (100 in FIG. 3) among the second wide beams. The third SSB SSB#3 may correspond to one of the third SSBs in operation S103B in FIG. 5B. That is, the third SSB #2 may correspond to an SSB transmitted through the wide beam directed toward the user equipment (100 in FIG. 3) among the third wide beams. The fourth SSB SSB#4 may correspond to one of the fourth SSBs in operation S103B in FIG. 5B. That is, the fourth SSB #3 may correspond to an SSB transmitted through the wide beam directed toward the user equipment (100 in FIG. 3) among the fourth wide beams.

According to embodiments, the user equipment (100 in FIG. 3) may perform the indexing operation on the narrow beams based on the first to fourth SSBs SSB#1, SSB#2, SSB#3, and SSB#4 included in one SSB burst and may estimate the optimal narrow beam based on the indexed narrow beams.

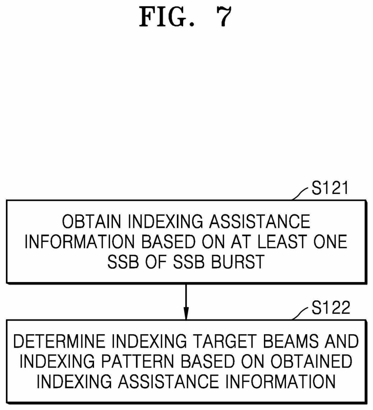

FIG. 7 is a flowchart of a specific embodiment of operation S120 in FIG. 3.

Referring to FIG. 7, operation S120 (FIG. 3) may include operation S121 and operation S122.

In operation S121, the user equipment (100 in FIG. 3) may obtain the indexing assistance information based on at least one SSB of the SSB burst. According to embodiments, the indexing assistance information may be included in the PBCH of at least one SSB of the SSB burst. The user equipment (100 in FIG. 3) may synchronize frequency and timing with the satellite (10 in FIG. 3) based on the PSS of the at least one SSB, obtain the PCI information on the satellite (10 in FIG. 3) based on the SSS, and decode the PBCH to obtain the indexing assistance information included in the PBCH.

In operation S122, the user equipment (100 in FIG. 3) may determine indexing target beams and the indexing pattern based on the obtained indexing assistance information. According to embodiments, the indexing assistance information may include first information for specifying narrow beams managed by the satellite (10 in FIG. 3), and second information for determining the indexing pattern matching the indexed narrow beams in the satellite (10 in FIG. 3).

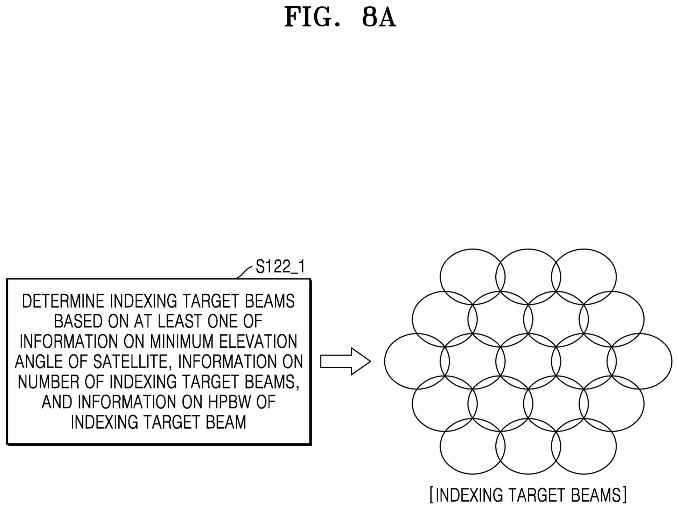

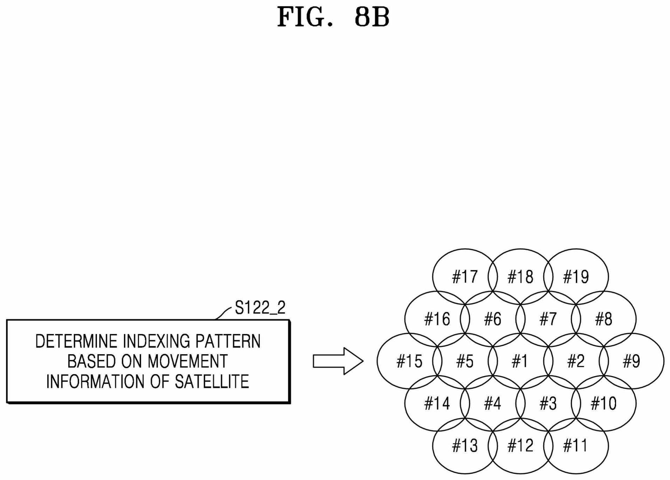

FIGS. 8A and 8B are flowcharts of specific embodiments of operation S122 in FIG. 7.

Referring to FIG. 8A, operation S122 (FIG. 7) may include operation S122_1.

According to embodiments, the first information of the indexing assistance information may include at least one of information about the minimum elevation angle of the satellite, information about the number of indexing target beams, and information about the HPBW of the indexing target beam.

In operation S122_1, the user equipment (100 in FIG. 3) may determine the indexing target beams based on at least one of the information about the minimum elevation angle of the satellite, the information about the number of indexing target beams, and the information about the HPBW of the indexing target beam.

As an example, the user equipment (100 in FIG. 3) may determine 19 indexing target beams on the U-V plane. The user equipment (100 in FIG. 3) may recognize 19 indexing target beams as narrow beams managed by the satellite (10 in FIG. 3). However, this is merely an example for convenience of description. The inventive concept is not limited thereto.

With further reference to FIG. 8B, operation S122 (FIG. 7) may further include operation S122_2.

According to embodiments, the second information of the indexing assistance information may include movement information of the satellite (10 in FIG. 3). As an example, the movement information of the satellite (10 in FIG. 3) may include information about the movement direction of the satellite (10 in FIG. 3). In some embodiments, the movement information of the satellite (10 in FIG. 3) may further include at least one of an altitude, a moving speed, and a moving path of the satellite (10 in FIG. 3).

In operation S122_2, the user equipment (100 in FIG. 3) may determine the indexing pattern based on the movement information of the satellite (10 in FIG. 3). The user equipment (100 in FIG. 3) may perform the indexing operation based on the determined indexing pattern for the indexing target beams in FIG. 8A. As an example, the indexing pattern may be determined as a clockwise indexing pattern based on the movement information of the satellite (10 in FIG. 3). According to the determined indexing pattern, the user equipment (100 in FIG. 3) may start indexing the indexing target beam #1 located at the center on the U-V plane and then index the remaining indexing target beams #2 to #19 in a clockwise direction (e.g., in a clockwise spiral).

In this manner, the narrow beams #1 to #19 indexed by the user equipment (100 in FIG. 3) may match the narrow beams indexed by the satellite (10 in FIG. 3).

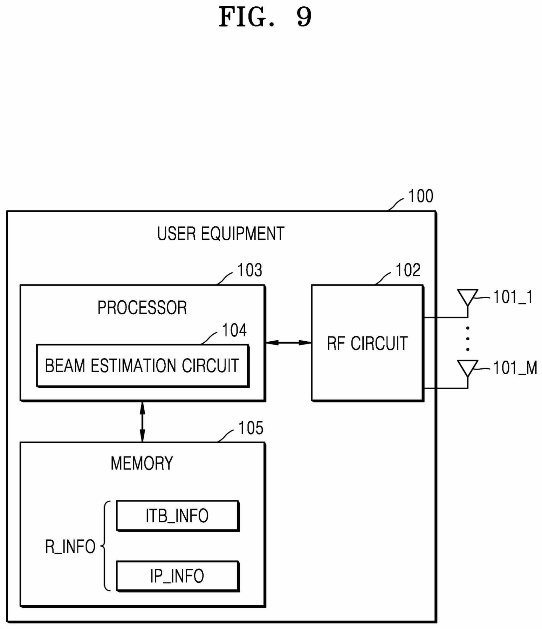

FIG. 9 is a block diagram of the user equipment 100 according to embodiments. FIG. 9 illustrates embodiments for minimizing the amount of computation of the operation of the user equipment 100 in FIGS. 8A and 8B. In FIG. 9, descriptions that are substantially the same as those given above with reference to FIG. 2 are omitted.

Referring to FIG. 9, the user equipment 100 may include the plurality of antennas 101_1 to 101_M, the RF circuit 102, the processor 103, and the memory 105.

According to embodiments, the memory 105 may store reference information R_INFO including at least one of indexing target beam information ITB_INFO and indexing pattern information IP_INFO. In FIG. 9, it is shown that the reference information R_INFO includes both the indexing target beam information ITB_INFO and the indexing pattern information IP_INFO, but this is only an example. The reference information R_INFO may include only one of the indexing target beam information ITB_INFO and the indexing pattern information IP_INFO.

According to embodiments, the beam estimation circuit 104 may determine the indexing target beams based on the indexing target beam information ITB_INFO. As an example, the beam estimation circuit 104 may determine, as the indexing target beams, narrow beams of a beam set mapped to a value of first data of the indexing assistance information in the indexing target beam information ITB_INFO. Herein, the first data may correspond to first information of the aforementioned indexing assistance information. The first data may indicate a value (e.g., a unique identifier) that is mapped to indexing target beams within the indexing target beam information ITB_INFO. That is, the beam estimation circuit 104 may effectively reduce the amount of computation by referring to the indexing target beam information ITB_INFO in performing operation S122_1 in FIG. 8A.

According to embodiments, the beam estimation circuit 104 may determine the indexing pattern based on the indexing pattern information IP_INFO. As an example, the beam estimation circuit 104 may determine, as the indexing pattern, the pattern mapped to a value of second data of the indexing assistance information in the indexing pattern information IP_INFO. Herein, the second data may correspond to second information of the aforementioned indexing assistance information. The second data may indicate a value (e.g., a unique identifier) that is mapped to an indexing pattern within the indexing pattern information IP_INFO. That is, the beam estimation circuit 104 may effectively reduce the amount of computation by referring to the indexing pattern information IP_INFO in performing operation S122_2 in FIG. 8B.

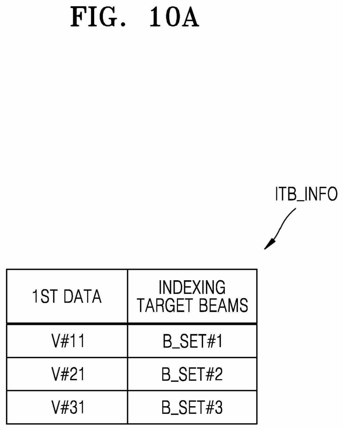

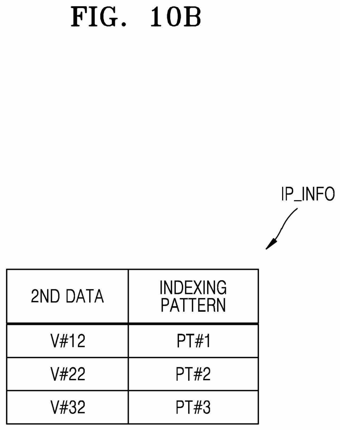

FIG. 10A is a table diagram specifically illustrating the indexing target beam information ITB_INFO in FIG. 9, and FIG. 10B is a table diagram specifically illustrating the indexing pattern information IP_INFO in FIG. 9.

Referring to FIG. 10A, the indexing target beam information ITB_INFO may indicate a mapping relationship between the first data and the indexing target beams. As an example, the first data having a value of V#11 may be mapped to a beam set of B_SET#1, the first data having a value of V#21 may be mapped a beam set of B_SET#2, and the first data having a value of V#31 may be mapped a beam set of B_SET#3.

As a specific example, when the first data has the value of V#11, the beam estimation circuit (104 in FIG. 9) may refer to the indexing target beam information ITB_INFO to identify the beam set of B_SET#1 mapped to V#11 and may determine narrow beams included in the beam set of B_SET#1 as the indexing target beams.

However, this is only an example. The inventive concept is not limited thereto.

With further reference to FIG. 10B, the indexing pattern information IP_INFO may indicate a mapping relationship between the second data and the indexing pattern. As an example, the second data having a value of V#12 may be mapped to a pattern of PT#1, the second data having a value of V#22 may be mapped a pattern of PT#2, and the second data having a value of V#32 may be mapped a pattern of PT#3.

As a specific example, when the second data has the value of V#12, the beam estimation circuit (104 in FIG. 9) may refer to the indexing pattern information IP_INFO to identify the pattern of PT#1 mapped to V#12 and may determine the pattern of PT#1 as the indexing pattern.

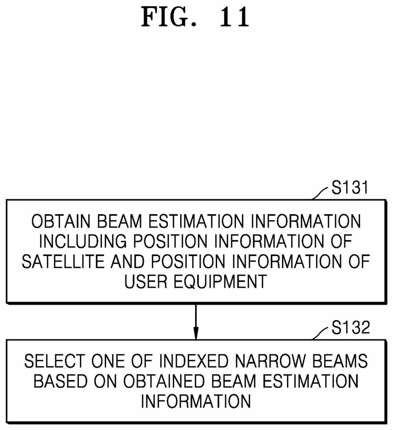

FIG. 11 is a flowchart of a specific embodiment of operation S130 in FIG. 3.

Referring to FIG. 11, operation S130 (FIG. 3) may include operation S131 and operation S132.

In operation S131, the user equipment (100 in FIG. 3) may obtain beam estimation information including position information of the satellite (10 in FIG. 3) and position information of the user equipment (100 in FIG. 3). According to embodiments, the position information of the satellite (10 in FIG. 3) may be included in the PDSCH transmitted from the satellite (10 in FIG. 3). The position information of the user equipment (100 in FIG. 3) may be determined by the user equipment (100 in FIG. 3). For instance, the position information of the user equipment (100 in FIG. 3) may be generated based on at least one of a cellular network-based position measurement method, a wi-fi-based position measurement method, an inertial sensor-based position measurement method, a Bluetooth low energy (BLE)-based position measurement method, a neural network-based position estimation method, and a global navigation satellite system (GNSS)-based position measurement method.

In operation S132, the user equipment (100 in FIG. 3) may select one of the indexed narrow beams based on the obtained beam estimation information. According to embodiments, the user equipment (100 in FIG. 3) may calculate the relative position between the user equipment (100 in FIG. 3) and the satellite (10 in FIG. 3) from the obtained beam estimation information and may select one of the indexed narrow beams based on the calculated relative position. The user equipment (100 in FIG. 3) may estimate the selected narrow beam as the optimal narrow beam and may perform the random access based on the selected narrow beam.

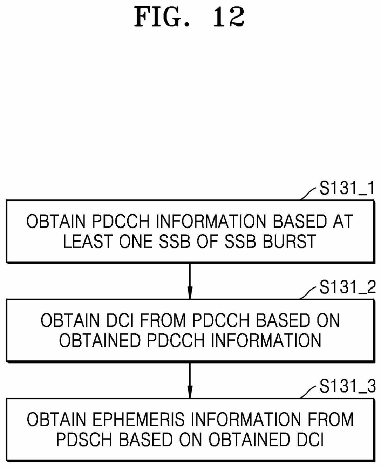

FIG. 12 is a flowchart of a specific embodiment of operation S131 in FIG. 11.

Referring to FIG. 12, operation S131 (FIG. 11) may include operation S131_1 to operation S131_3.

In operation S131_1, the user equipment (100 in FIG. 3) may obtain physical downlink control channel (PDCCH) information based on at least one SSB of the SSB burst. According to embodiments, the user equipment (100 in FIG. 3) may decode the PBCH of the at least one SSB to obtain a master information block (MIB) from the decoded PBCH and may receive PDCCH information based on the MIB. As an example, the PDCCH information may include remaining system information (RMSI)-radio network temporary identifier (RNTI) information and CORESET#0 position information of the PDCCH.

In operation S131_2, the user equipment (100 in FIG. 3) may obtain downlink control information (DCI) from the PDCCH based on the obtained PDCCH information.

In operation S131_3, the user equipment (100 in FIG. 3) may obtain the ephemeris information from the PDSCH based on the obtained DCI. The user equipment (100 in FIG. 3) may use the ephemeris information as the position information of the satellite (10 in FIG. 3). As an example, the ephemeris information may be included in the PDSCH in the form of a radio resource control (RRC) message or a media access control (MAC) message. As an example, the ephemeris information may include timing correction information and orbital parameters of the satellite. As a specific example, the ephemeris information may include coordinates and velocity of the satellite (FIG. 10, FIG. 3), GPS time correction information, and relative position information with other satellites.

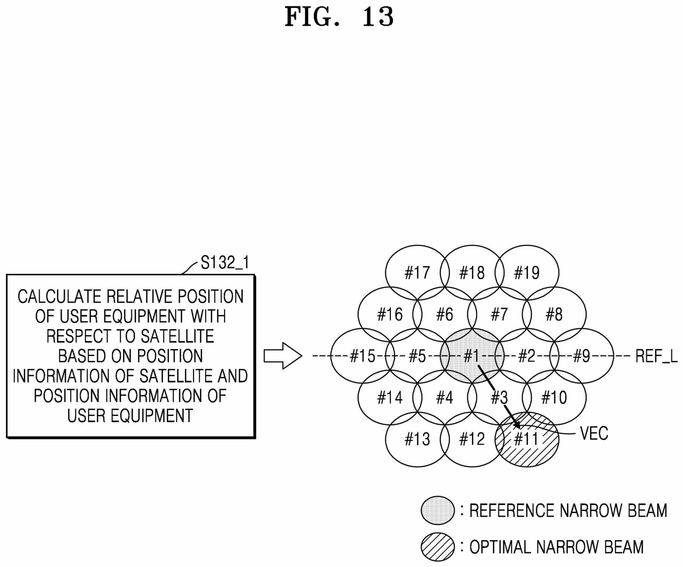

FIG. 13 is a flowchart of a specific embodiment of operation S132 in FIG. 11.

Referring to FIG. 13, operation S132 (FIG. 11) may include operation S132_1.

In operation S132_1, the user equipment (100 in FIG. 3) may calculate the relative position of the user equipment (100 in FIG. 3) with respect to the satellite (10 in FIG. 3), based on the position information of the satellite (10 in FIG. 3) and the position information of the user equipment (100 in FIG. 3).

As an example, the user equipment (100 in FIG. 3) may generate a vector VEC on the U-V plane based on the relative position and a reference line REF_L on the U-V plane and may select the optimal narrow beam #11 indicated by the vector VEC from the reference narrow beam #1 corresponding to the position of the satellite (10 in FIG. 3). The reference line REF_L may represent (e.g., may be aligned with) a direction of travel of the satellite (10 in FIG. 3). The direction of travel of the satellite (10 in FIG. 3) may therefore be used to orient the U-V plane relative to the user equipment (100 in FIG. 3). For instance, the user equipment (100 in FIG. 3) may be configured to transform the relative position of the user equipment (100 in FIG. 3) with respect to the satellite (10 in FIG. 3) (e.g., in terrestrial coordinates) into a relative position vector within the reference frame of the satellite (10 in FIG. 3). This translation may be based on the relative position information and the direction of travel of the satellite (10 in FIG. 3). The vector can indicate a specific coordinate on the U-V plane (e.g., corresponding to a location of the user equipment (100 in FIG. 3) in the U-V plane). The optimal narrow beam may be selected based on the determined coordinate on the U-V plane. For instance, the optimal narrow beam may be selected as the indexed narrow beam that covers that particular coordinate in the U-V plane (e.g., the indexed narrow beam that has a center that is closest to the particular coordinate in the U-V plane).

However, this is merely an example and is not limited thereto. The user equipment (100 in FIG. 3) may select the optimal narrow beam #11 from among the indexed narrow beams #1 to #19 based on the relative position with the satellite (10 in FIG. 3) through various ways.

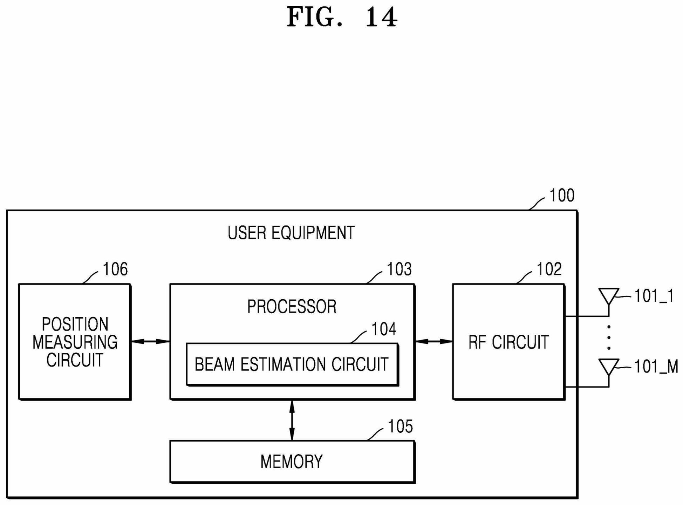

FIG. 14 is a block diagram of the user equipment 100 according to embodiments. FIG. 14 illustrates embodiments for generating the position information of the user equipment 100. In FIG. 14, descriptions that are substantially the same as those given above with reference to FIGS. 2 and 9 are omitted.

Referring to FIG. 14, the user equipment 100 may include the plurality of antennas 101_1 to 101_M, the RF circuit 102, the processor 103, the memory 105, and a position measuring circuit 106.

According to embodiments, the position measuring circuit 106 may measure the position of the user equipment 100 to generate the position information of the user equipment 100. Hereinafter, specific examples of the position measurement method of the position measuring circuit 106 are described.

According to embodiments, the position measuring circuit 106 may receive a signal from at least one satellite according to the GNSS-based position measurement method and may measure the position of the user equipment 100 based on the received signal. The position measuring circuit 106 may include a GNSS receiver.

In some embodiments, the position measuring circuit 106 may measure the position of the user equipment 100 by using a base station or a satellite, according to the cellular network-based position measurement method.

In some embodiments, the position measuring circuit 106 may measure the position of the user equipment 100 by using a Wi-Fi signal, according to the Wi-Fi based position measurement method.

In some embodiments, the position measuring circuit 106 may measure the position of the user equipment 100 by using an inertial sensor, according to the inertial sensor-based position measurement method. The position measuring circuit 106 may include the inertial sensor.

In some embodiments, the position measuring circuit 106 may measure the position of the user equipment 100 in an indoor area and a specific area by using a Bluetooth signal, according to the Bluetooth-based position measurement method.

In some embodiments, the position measuring circuit 106 may estimate the position of the user equipment 100 by using data analysis and a neural network model, according to the neural network-based position estimation method.

In some embodiments, the position measuring circuit 106 may measure the position of the user equipment 100 more accurately by combining at least two of the plurality of methods described above.

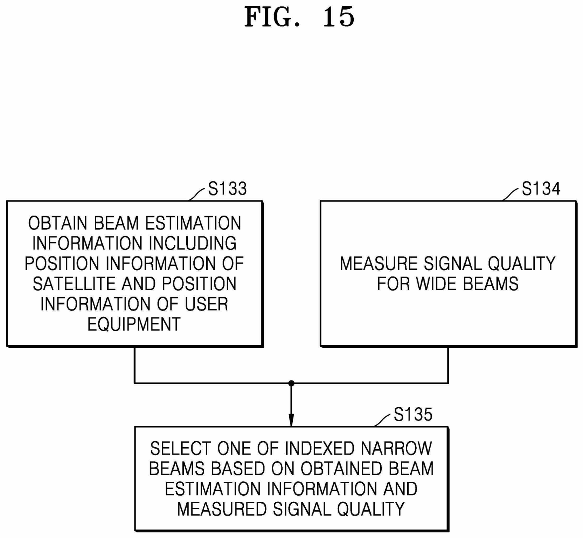

FIG. 15 is a flowchart of a specific embodiment of operation S130 in FIG. 3.

Referring to FIG. 15, operation S130 (FIG. 3) may include operation S133 to operation S135.

In operation S133, the user equipment (100 in FIG. 3) may obtain the beam estimation information including the position information of the satellite (10 in FIG. 3) and the position information of the user equipment (100 in FIG. 3).

In operation S134, the user equipment (100 in FIG. 3) may measure the signal quality of the wide beams. As an example, the user equipment (100 in FIG. 3) may measure the reception signal strength (e.g., reference signals received power (RSRP) and/or signal to interference plus noise ratio (SINR)) of each of the wide beams corresponding to the first SSB to the third SSB SSB#1, SSB#2, and SSB#3 in FIG. 6A.

According to embodiments, operation S133 and operation S134 may be performed in parallel. Alternatively, operation S133 and operation S134 may be performed in sequence, in either order.

In operation S135, the user equipment (100 in FIG. 3) may select one of the indexed narrow beams, based on the obtained beam estimation information and the measured signal quality.

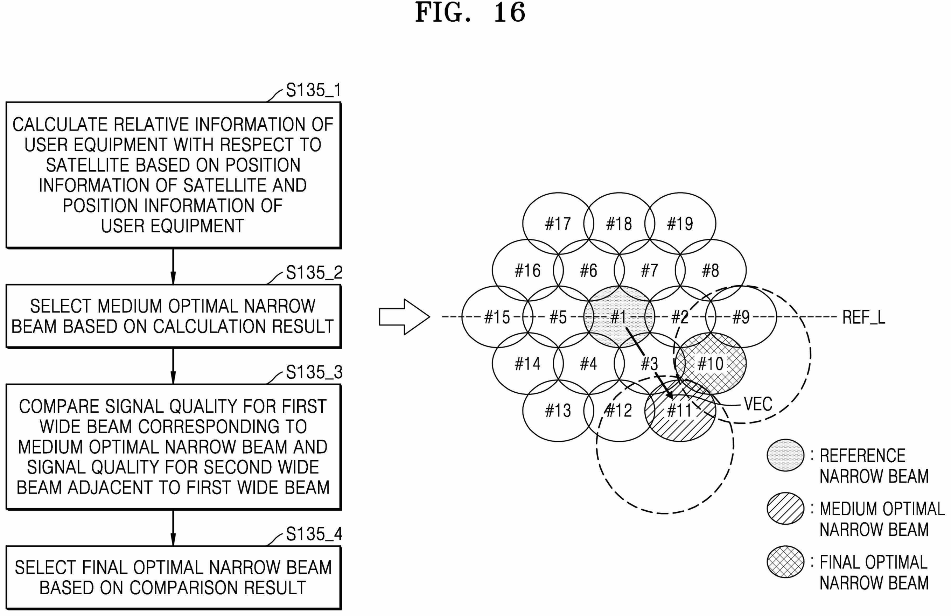

FIG. 16 is a flowchart of a specific embodiment of operation S135 in FIG. 15.

Referring to FIG. 16, operation S135 may include operation S135_1 to operation S135_4.

In operation S135_1, the user equipment (100 in FIG. 3) may calculate the relative position of the user equipment (100 in FIG. 3) with respect to the satellite (10 in FIG. 3), based on the position information of the satellite (10 in FIG. 3) and the position information of the user equipment (100 in FIG. 3).

In operation S135_2, the user equipment (100 in FIG. 3) may select a medium optimal narrow beam based on the calculation result.

In operation S135_3, the user equipment (100 in FIG. 3) may compare the signal quality of the first wide beam corresponding to the medium optimal narrow beam with the signal quality of the second wide beam adjacent to the first wide beam.

In operation S135_4, the user equipment (100 in FIG. 3) may select a final optimal narrow beam based on the comparison result. In the present context, 'optimal narrow beam' refers to a narrow beam that is selected by the user equipment (100 in FIG. 3), for instance, as being a preferred narrow beam for communication. The medium optimal narrow beam may be an initial optimal narrow beam that is selected for further consideration. The final optimal narrow beam may the narrow beam that is selected for use in communication with the satellite (10 in FIG. 3).

For example, in operation S135_2, the user equipment (100 in FIG. 3) may select the medium optimal narrow beam #11, based on the vector VEC according to the relative position. In operation S135_3, the user equipment (100 in FIG. 3) may confirm that the signal quality of a wide beam WB1 corresponding to the medium optimal narrow beam #11 is less than the signal quality of another wide beam WB2. In operation S135_4, the user equipment (100 in FIG. 3) may select the final optimal narrow beam #10 considering that the signal quality of the other wide beam WB2 is better than that of the wide beam WB1. For instance, the user equipment (100 in FIG. 3) may select the final optimal narrow beam #10 in response to the signal quality of the other wide beam WB2 being better than that of the wide beam WB1. If the signal quality of the other wide beam WB2 is not better than that of the wide beam WB1, then the medium optimal narrow beam #11 may be selected as the final optimal narrow beam.

For example, the user equipment (100 in FIG. 3) may select a medium optimal narrow beam based on the relative position of the user equipment (100 in FIG. 3) and the satellite (10 in FIG. 3), and then may select a final optimal narrow beam based on a comparison of the signal quality of the wide beam corresponding to the medium optimal narrow beam with the signal quality of one or more other wide beams. The one or more other wide beams may be one or more wide beams that neighbor (e.g., are adjacent to) the wide beam corresponding to the medium optimal narrow beam. In addition or alternatively, the one or more other wide beams may be one or more other wide beams that are close to (e.g., within a predefined distance of) the medium optimal narrow beam or the wide beam corresponding to the medium optimal wide beam. The wide beam having the best signal quality may be selected from the wide beam corresponding to the medium optimal narrow beam and the one or more other wide beams.

A narrow beam within the selected wide beam may be selected as the final optimal wide beam. The narrow beam within the selected wide beam that is closest to (e.g., that is adjacent to) the medium optimal narrow beam may be selected as the final optimal narrow beam.

In addition or alternatively, the other wide beams to be considered may be selected based on a determination of whether any narrow beams that are adjacent to (or within a predetermined distance of) the medium optimal narrow beam fall outside the wide beam that corresponds to the medium optimal narrow beam. If any narrow beams that are adjacent to (or within a predetermined distance of) the medium optimal narrow beam fall outside the wide beam that corresponds to the medium optimal narrow beam, the wide beam for that narrow beam may be considered for the purposes of comparing its signal quality to that of the wide beam corresponding to the medium optimal narrow beam. If that wide beam is selected, then the narrow beam that is adjacent to (or within a predetermined distance of) the medium optimal narrow beam may be selected as the final optimal narrow beam.

However, this is only an example. The inventive concept is not limited thereto.

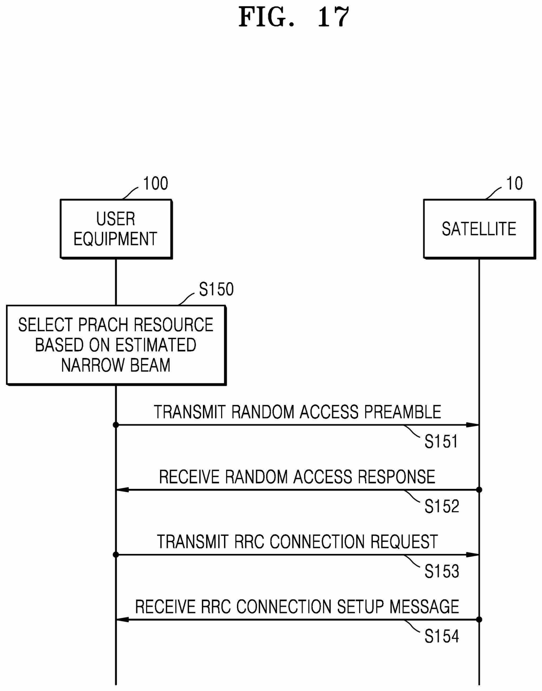

FIG. 17 is a diagram of a sequence between the user equipment 100 and the satellite 10 in the non-terrestrial network, according to embodiments.

Referring to FIG. 17, in operation S150, the user equipment 100 may select the PRACH resource based on the estimated narrow beam. According to embodiments, the user equipment 100 may select the PRACH resource based on the index of the estimated narrow beam and the PCI information of the satellite 10.

Operation S151 to operation S154 may be performed in the second time period described with reference to FIG. 5A.

In operation S151, the user equipment 100 may transmit the random access preamble to the satellite 10 through the selected PRACH resource. Meanwhile, the satellite 10 may identify the index of the narrow beam selected as the optimal narrow beam by the user equipment 100, based on the selected PRACH resource.

In operation S152, the user equipment 100 may receive a random access response through the selected PRACH resource. The user equipment 100 may generate the random access response based on the index of the narrow beam identified in operation S151. As an example, the random access response may include information about a time offset, information about an uplink resource allocation, and information about a temporary identifier.

In operation S153, the user equipment 100 may transmit an RRC connection request to the satellite 10 based on the information included in the random access response.

In addition, in operation S154, the user equipment 100 may receive an RRC connection setup message. The user equipment 100 may establish an RRC connection with the satellite 10 and perform network registration based on the RRC connection setup message.

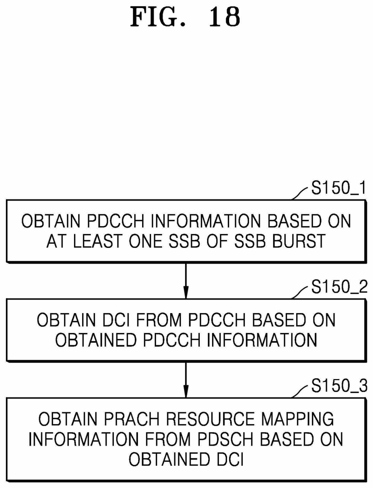

FIG. 18 is a flowchart of a specific embodiment of operation S150 in FIG. 17.

Referring to FIG. 18, operation S150 (FIG. 17) may include operation S150_1 to operation S150_3.

In operation S150_1, the user equipment (100 in FIG. 17) may obtain the PDCCH information based on at least one SSB in the SSB burst.

In operation S150_2, the user equipment (100 in FIG. 17) may obtain the DCI from the PDCCH based on the obtained PDCCH information.

In operation S150_3, the user equipment (100 in FIG. 17) may obtain PRACH resource mapping information from the PDSCH based on the obtained DCI. Thereafter, the user equipment (100 in FIG. 17) may select the PRACH resource mapped to the index of the estimated narrow beam and the PCI information about the satellite 10 from the PRACH resource mapping information.

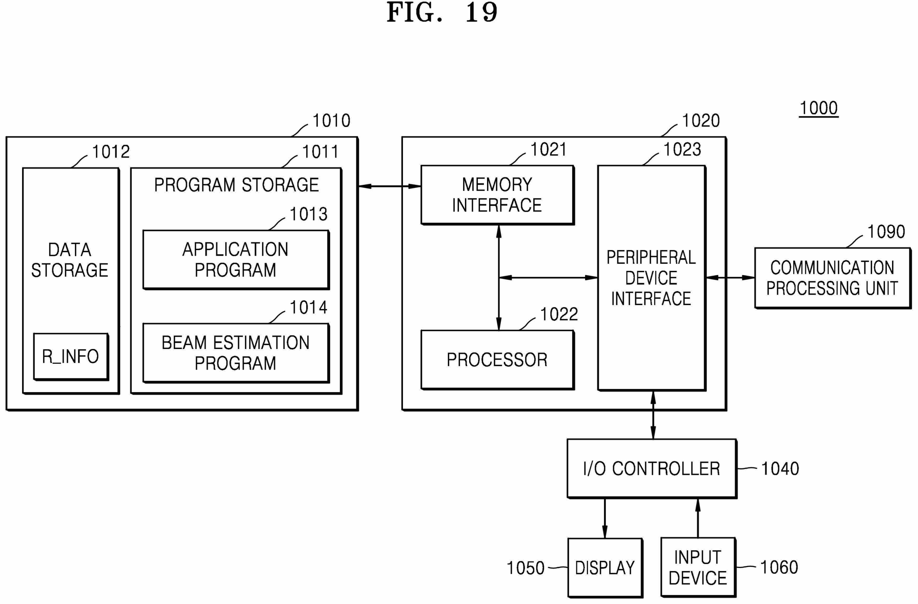

FIG. 19 is a block diagram of an electronic device 1000 according to embodiments.

Referring to FIG. 19, the electronic device 1000 may include a memory 1010, a processor unit 1020, an input/output (I/O) controller 1040, a display 1050, an input device 1060, and a communication processing unit 1090. A plurality of memories 1010 may be present. Each component of the electronic device 1000 is described as follows.

The memory 1010 may include a program storage 1011 that stores a program for controlling an operation of the electronic device 1000, and a data storage 1012 that stores data generated during program execution. The data storage 1012 may store data necessary for operations of an application program 1013 and a beam estimation program 1014. According to embodiments, the data storage 1012 may store reference information R_INFO necessary for estimating the optimal narrow beam, according to embodiments. For a specific example, the reference information R_INFO may include information referenced to determine indexing target beams and information referenced to determine an indexing pattern.

The program storage 1011 may include the application program 1013 and the beam estimation program 1014. The program included in the program storage 1011 may be expressed as an instruction set as a set of instructions. The application program 1013 may include program codes for performing various applications operating in the electronic device 1000. That is, the application program 1013 may include codes (or commands) relating to various applications run by the processor 1022. The beam estimation program 1014 may include control codes for performing the indexing operation on narrow beams, according to embodiments, and estimating the optimal narrow beam based on the indexed narrow beams.

According to embodiments, the processor 1022 may execute the beam estimation program 1014 to index the narrow beams corresponding to the wide beams based on the SSB burst received through the wide beams swept from the satellite and select one of the indexed narrow beams as the optimal narrow beam. The processor 1022 may use the reference information R_INFO in the data storage 1012 when performing the operation.

Meanwhile, the electronic device 1000 may include a communication processing unit 1090 that performs communication functions for voice communication and data communication. The processor 1022 may receive the SSB burst from the satellite by using the communication processing unit 1090. In addition, the processor 1022 may perform an operation for initial connection with the satellite by using the communication processing unit 1090.

A peripheral device interface 1023 may control connections between the I/O controller 1040, the communication processing unit 1090, the processor 1022, and the memory interface 1021. The processor 1022 controls, by using at least one software program, a plurality of cells to provide the corresponding service. In this case, the processor 1022 may execute at least one program stored in the memory 1010 to provide the service corresponding to the program.

The I/O controller 1040 may provide an interface between an I/O device, such as the display 1050 and the input device 1060, and the peripheral device interface 1023. The display 1050 displays status information, input characters, moving pictures, still pictures, and the like. For example, the display 1050 may display application program information driven by the processor 1022.

The input device 1060 may provide input data generated by selection of the electronic device 1000 to the processor unit 1020 through the I/O controller 1040. In this case, the input device 1060 may include a keypad including at least one hardware button, a touchpad for sensing touch information, and the like. For example, the input device 1060 may provide touch information, such as a touch, a touch motion, and a touch release, which is sensed through the touchpad, to the processor 1022 through the I/O controller 1040.

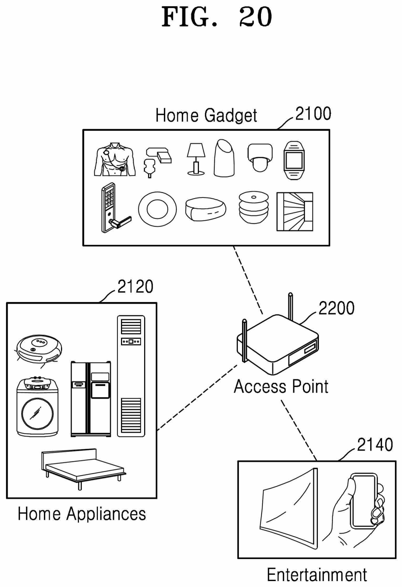

FIG. 20 is a diagram of communication devices that perform the beam estimation operation, according to embodiments.

Referring to FIG. 20, a home gadget 2100, home appliances 2120, entertainment equipment 2140, and an access point (AP) 2200 may perform mutual communication. At least one of the home gadget 2100, the home appliances 2120, the entertainment equipment 2140, and the AP 2200 may perform the beam estimation operation, according to embodiments, to effectively perform the initial connection.

In some embodiments, the home gadget 2100, the home appliances 2120, the entertainment equipment 2140, and the AP 2200 may constitute an internet of things (IoT) network system. It may be understood that the communication devices shown in FIG. 20 are merely examples. The components according to embodiments may be included in other communication devices that are not shown in FIG. 19.

While the inventive concept has been particularly shown and described with reference to embodiments thereof, it will be understood that various changes in form and details may be made therein without departing from the scope of the following claims.

## Claims

1. An operation method of user equipment in communication with a satellite in a non-terrestrial network, the operation method comprising:
receiving a synchronization signal block, SSB, burst through wide beams from the satellite (S110);
performing, based on the SSB burst, an indexing operation on narrow beams corresponding to the wide beams (S120);
estimating an optimal narrow beam, based on the indexed narrow beams (S130); and
performing random access to the satellite, based on the estimated narrow beam (S140).

2. The operation method of claim 1, wherein the indexed narrow beams match narrow beams indexed by the satellite.

3. The operation method of claim 1 or claim 2, wherein the performing of the indexing operation comprises:
obtaining indexing assistance information, based on at least one SSB of the SSB burst (S121);
determining indexing target beams and an indexing pattern, based on the obtained indexing assistance information (S122); and
indexing the narrow beams, based on the determined indexing target beams and the determined indexing pattern.

4. The operation method of claim 3, wherein, for determining the indexing target beams, the obtained indexing assistance information comprises at least one of information on a minimum elevation angle of the satellite, information on a number of the indexing target beams, and information on a half power beam width (HPBW) of the indexing target beams.

5. The operation method of claim 3 or claim 4, wherein the obtained indexing assistance information comprises movement information of the satellite, for determining the indexing pattern.

6. The operation method of claim 5, wherein the movement information of the satellite comprises information on a movement direction of the satellite.

7. The operation method of any of claims 3-6, wherein the determining of the indexing target beams and the indexing pattern comprises determining, as the indexing target beams, narrow beams of a beam set mapped to a value of first data of the obtained indexing assistance information, based on indexing target beam information stored in the user equipment.

8. The operation method of any of claims 3-7, wherein the determining of the indexing target beams and the indexing pattern comprises determining, as the indexing pattern, a pattern mapped to a value of second data of the obtained indexing assistance information, based on indexing pattern information stored in the user equipment.

9. The operation method of any preceding claim, wherein the estimating of the optimal narrow beam comprises:
obtaining beam estimation information including position information of the satellite and position information of the user equipment (S131); and
selecting one of the indexed narrow beams as the optimal narrow beam, based on the obtained beam estimation information (S132).

10. The operation method of claim 9, wherein the selecting of one of the indexed narrow beams as the optimal narrow beam comprises:
calculating a relative position of the user equipment with respect to the satellite, based on the position information of the satellite and the position information of the user equipment (S132_1); and
selecting, as the optimal narrow beam, a narrow beam that is offset by a vector matching the relative position from a reference narrow beam corresponding to a position of the satellite.

11. The operation method of claim 9 or claim 10, wherein the position information of the satellite corresponds to ephemeris information of a physical downlink shared channel received from the satellite.

12. The operation method of any of claims 9-11, wherein the position information of the user equipment is generated based on at least one of a cellular network-based position measurement method, a Wi-Fi-based position measurement method, an inertial sensor-based position measurement method, a Bluetooth low energy based position measurement method, a neural network-based position estimation method, and a global navigation satellite system based position measurement method.

13. The operation method of any preceding claim, wherein the estimating of the optimal narrow beam comprises:
obtaining beam estimation information including position information of the satellite and position information of the user equipment;
measuring signal quality of the wide beams, based on the SSB burst; and
selecting one of the indexed narrow beams as the optimal narrow beam, based on the obtained beam estimation information and the measured signal quality.

14. The operation method of any preceding claim, wherein the performing of the random access comprises:
selecting a physical random access channel, PRACH, resource corresponding to an index of the estimated narrow beam; and
transmitting a random access preamble to the satellite by using the selected PRACH resource.

15. The operation method of any preceding claim, wherein a number of SSBs included in the SSB burst matches a result obtained by dividing a number of the wide beams by a number of mutually-orthogonal wide beams that can be formed at a time in the satellite.
